Europäisches Patentamt

European Patent Office

Office européen des brevets

(19)

(11) Veröffentlichungsnummer: **0 142 746**
**B1**

(12) # EUROPÄISCHE PATENTSCHRIFT

(45) Veröffentlichungstag der Patentschrift:
**24.05.89**

(51) Int. Cl.⁴: **C 03 B 9/40,** C 03 B 7/16

(21) Anmeldenummer: **84113049.5**

(22) Anmeldetag: **30.10.84**

(54) Anordnung zur Steuerung eines Tropfenverteilers einer Glas-Verarbeitungsmaschine.

(30) Priorität: **22.11.83 DE 3342062**

(43) Veröffentlichungstag der Anmeldung:
**29.05.85 Patentblatt 85/22**

(45) Bekanntmachung des Hinweises auf die Patenterteilung:
**24.05.89 Patentblatt 89/21**

(84) Benannte Vertragsstaaten:
**AT BE CH FR GB IT LI LU NL SE**

(56) Entgegenhaltungen:
**EP-A- 0 004 906**
**EP-A- 0 062 169**
**CH-A- 637 096**
**US-A- 4 357 157**

(73) Patentinhaber: **EMHART ZÜRICH S.A.,**
**Seefeldstrasse 224, Zürich (CH)**

(72) Erfinder: **Knoth, Werner-Dieter, Byfangerstrasse 175,**
**D-4300 Essen 15 (DE)**
Erfinder: **Kopatz, Klaus, Wrangelstrasse 30a,**
**D-4250 Bottrop (DE)**
Erfinder: **Hüllen, Helmut, Dreilindenstrasse 93,**
**D-4300 Essen 1 (DE)**

(74) Vertreter: **Drury, Peter Lawrence et al, Emhart Patents**
**Department Lyn House 39 The Parade, Oadby, Leicester**
**LE2 5BB (GB)**

## Beschreibung

Die Erfindung betrifft eine Anordnung zur Steuerung eines Tropfenverteilers einer IS- oder RIS-Maschine zur Herstellung von Hohlglasartikeln, welcher mit einem hydraulischen Antrieb zur Ausführung periodischer Schwenkbewegungen gekoppelt ist, welcher hydraulische Antrieb mittels eines Umschaltventils beaufschlagbar ist, welches von einem elektronischen Rechner gesteuert ist.

IS-Verarbeitungsmaschinen zur Herstellung von Hohlglasartikeln sind mit Vorformen und diesen zugeordneten Fertigformen ausgerüstet. Das wesentliche Merkmal dieser IS-Verarbeitungsmaschinen besteht darin, daß in jeder Fertigungsstation gleichzeitig, aber zeitlich versetzt, der gleiche Produktionsprozess abläuft. Der Ablauf des Herstellungsprozesses für Hohlglasartikel erfolgt in der Weise, daß flüssige Glastropfen jeweils in eine metallische Vorform der einzelnen Stationen zu einem Vorformling, dem sog. Külbel, verpreßt oder ausgeblasen werden. Nach Übergabe der jeweiligen Vorformlinge in den einzelnen Vorformen zugeordnete Fertigformen werden die Vorformlinge in diesen durch weiteres Ausblasen oder Evakuieren ihrer äußeren Umgebung zu den fertigen Artikeln umgeformt. Dabei sind im Vorformkomplex üblicherweise eine, zwei oder drei Formen aneinander gebündelt, also sog. Ein-, Zwei- oder Dreifach-Formen. Eine gleiche Bündelung findet sich dann im Fertigungskomplex jeweils einer Fertigungsstation einer IS-Verarbeitungsmaschine. Die anderen Stationen dieser Maschine sind analog aufgebaut. Die einzelnen Produktionsstationen sind linear angeordnet. Bei den sog. RIS-Verarbeitungsmaschinen sind die Fertigformen auf einem Drehteller angeordnet, wobei jeweils einer Vorform mindestens zwei Fertigformen zugeordnet sind.

Die Aufgabe eines Tropfenverteilers für derartige Glasverarbeitungsmaschinen besteht darin, die von einem kontinuierlich austretenden flüssigen Glasstrang abgetrennten Abschnitte (Tropfen) den einzelnen Rinnen oder Stationen einer IS- bzw. RIS-Verarbeitungsmaschine zuzuführen. Der Tropfenverteiler führt dabei Schwenkbewegungen aus, die schnell und mit hoher Präzision ausgeführt sein müssen, um bei vergleichsweise hohen Produktionsgeschwindigkeiten die Glastropfen mit ausreichender Genauigkeit in die Zuleitungsrinnen der Produktionsstationen der Glasverarbeitungsmaschine abgeben zu können. Innerhalb des vorgegebenen Schwenkwinkels stoppt der Tropfenverteiler entsprechend der Anzahl der Produktionsstationen, die dieser mit Glastropfen beschicken muß. Die Reihenfolge der Stopps kann innerhalb des max. Schwenkwinkelbereichs beliebig wählbar sein. Der Tropfenverteiler ist mit einem Schwenkantrieb versehen, wobei mittels einer verstellbaren Steuerung für den Stopp an der vorgewählten Stelle gesorgt ist.

Die Leistungsfähigkeit eines solchen Tropfenverteilers ist bestimmt durch die Geschwindigkeit der Schwenkbewegung und durch die Genauigkeit der Haltepositionierung. Die Verwendung geeigneter Antriebe hängt von der Art der zum Einsatz gelangenden Energieform ab. Auch die Steuerung der Antriebe kann mittels verschiedener Energiemedien erfolgen und ist sehr unterschiedlich ausgelegt.

Durch die CH-A-523 855 ist eine Steuerung bekannt, bei welcher eine mechanisch angetriebene, sich kontinuierlich drehende Kurvenscheibe einen Kurvenstößel steuert. Dieser bewegt seinerseits den Tropfenverteiler. Die Genauigkeit der Positionierung und die Leistungsfähigkeit dieser Einrichtung wird maßgeblich beeinflußt von den zu bewegenden Massen, der Andruckkraft des Stößels und dem Verschleiß der Kurvenscheibe. Bei dieser Ausführung findet ein mechanischer Antrieb und eine mechanische Steuerung Verwendung.

Durch die DE-A-2 501 109 ist eine Ausführung bekannt, bei welcher eine mechanisch angetriebene Kurvenscheibe einen Stößel beaufschlagt. Dieser betätigt Zahnräder und Zahnstangen, die ihrerseits auf ein Hydraulikventil arbeiten. Bei dieser Ausführung ist der Tropfenverteiler mechanisch angetrieben und die Steuerung mechanisch hydraulisch betätigt.

Nachteilig erweist sich bei diesen bekannten Ausführungen vergleichsweise große zu bewegende Massen, damit verbunden eine zeitliche Trägheit und wegen der verwendeten Steuermedien eine nicht ausreichende Genauigkeit bei der Positionierung in den Haltestellungen des Tropfenverteilers. Die Folge hiervon ist Begrenztheit in der Qualität und Produktivität der zu erzeugenden Glasbehälter.

Eine wesentliche Verbesserung der vorerwähnten Mängel wird durch den Vorschlag nach der DE-A-3 113 267 erreicht. In dieser wird u.a. ein hydraulisch angetriebener Tropfenverteiler vorgeschlagen, wobei die Steuerung der Antriebshydraulik durch ein Umschaltventil erfolgt, das über einen elektronischen Rechner und Prozessor betätigt ist.

Von diesem Stand der Technik ausgehend liegt der Erfindung die Aufgabe zugrunde, unter Vermeidung vorerwähnter Nachteile eine Anordnung zur Steuerung eines Tropfenverteilers der eingangs genannten Art zu schaffen, welche nicht nur in einfacher Weise ausgebildet ist, sondern auch eine Erhöhung der Produktivität sowie Verbesserung der Qualität der herzustellenden Glasbehälter bewirkt.

Erfindungsgemäß wird dies dadurch erreicht, daß der hydraulische Antrieb zur Verschiebung einer Zahnstange von einem innerhalb eines Zylinders bewegbaren Kolben ausgebildet ist, wobei die Zahnstange in Wirkverbindung mit dem Tropfenverteiler steht, und daß das Umschaltventil über einen Digital-Analog-Wandler mit einem Adapter verbunden ist, an den über einen Analog-Digital-Wandler ein mit dem Antrieb des Tropfenverteilers in Wirkverbindung stehender Winkeldecodierer od.dgl. angeschlossen ist und der über ein parallel arbeitendes Interface mit einer Recheneinheit sowie einem Speicherwerk in Verbindung steht und mit einer Synchronisation gekoppelt ist. Durch diese Ausgestaltung ergibt sich eine hohe Wiederkehrgenauigkeit beim Schwenken des Tropfenverteilers, eine größtmögliche Start- und Stoppbeschleunigung für diese Bewegung, eine leichte Einstellbarkeit (Programmierung) der Windelpositionen, eine Selbstkontrolle (Rückmeldung) auf Einhaltung der vorgegebenen Werte sowie eine gleichbleibende Geschwindigkeit innerhalb der Bewegung, und das alles bei beliebig wechselnder Folge der Haltepunkte.

Vorteilhaft findet als Umschaltventil ein proportional arbeitendes Umsteuerventil Verwendung. Zwischen Umschaltventil und Wandler ist ein Servoverstärker zwischengeschaltet.

In weiterer Ausgestaltung der Erfindung kann bzw. können auf den Adapter eine Soll-Wert-Eingabe und/oder eine Ist-Wert-Darstellung und/oder ein Warngerät und/oder Not-Stopp geschaltet sein.

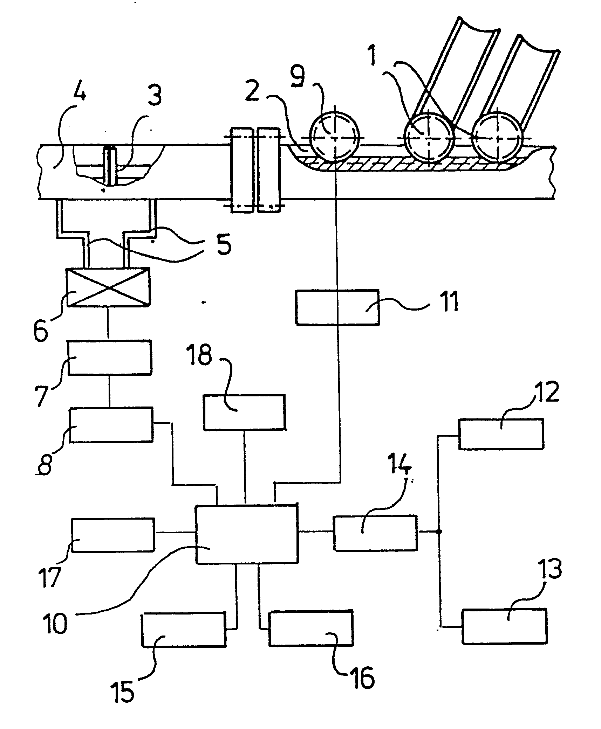

Ein Ausführungsbeispiel der Erfindung ist an Hand der Zeichnung näher erläutert, welche die Anordnung in Form eines Blockschaltbildes zeigt.

Die Achsen 1 des im dargestellten Ausführungsbeispiel als Doppeltropfen wirkenden Tropfenverteilers sind über die Zahnstange 2 mit dem Kolben 3 des hydraulisch beaufschlagten Antriebszylinders 4 verbunden. Der Kolben 3 ist beidseitig beaufschlagbar, und zwar mittels der in den Antriebszylinder 4 einmündenden Zuleitungen 5 für das hydraulische Medium. Die Strömungsrichtung des hydraulischen Mediums, dessen bewegte Mengen und der Zeitpunkt der Bewegung wird bestimmt durch das Umschaltventil 6, welches als proportional arbeitendes Umsteuerventil ausgebildet ist. Die Linien zwischen den Symbolen der elektrischen und/oder elektronischen Bauteile symbolisieren elektrische Verbindungen.

Das Umschaltventil 6 wird gesteuert durch elektrische Impulse, die vom Servoverstärker 7 gegeben werden. An dessen Eingabe liegt der Digital-Analog-Wandler 8, welcher mit einem Adapter 10 verbunden ist. Die Kontrolle der nach einem Bewegungsschritt des Tropfenverteilers tatsächlich erreichten neuen Position erfolgt durch einen Winkeldecodierer 9 od.dgl. Dessen Antrieb stellt ein Zahnrad dar, dessen Bewegung von der Zahnstange 2 abgenommen wird. Der Impulsgeber des Winkelcodierers 9 meldet die erreichte Position über den Analog-Digital-Wandler 11 dem digitalarbeitenden Adapter 10. Der Adapter 10 führt die Funktion eines Komparators sowie eines Korrelators aus. Die Verbindung zur Recheneinheit 12 mit dem Speicherwerk 13 erfolgt über ein parallel arbeitendes Interface 14. Die Recheneinheit 12 leitet die Eingabedaten zu dem Adapter 10. Die zeitliche Einkoppelung der Bewegung des Tropfenverteilers in den Rhythmus der Mechanismen der Glasverarbeitungsmaschine geschieht über die Synchronisation 15. Die Synchronisation 15 sorgt dafür, daß der Tropfenverteiler mit der zugehörigen Maschine synchronisiert wird. Die Soll-Wert-Eingabe und Darstellung, z.B. über Display, der Ist-Werte, wird mittels des Gerätes 16 vorgenommen. Grenzsituationen werden über ein Warngerät 17 und/oder über einen Not-Stopp 18 beherrscht.

Die Antriebssteuerung arbeitet in folgenden Stufen:

Daten eingeben über Tastatur 16,

Speichern dieser Daten in flüchtigen und/oder nicht flüchtigen Speicherwerken 13,

Simulierung eines sich daraus ergebenden Soll-Zustandes,

Herstellung eines Ist-Zustandes aufgrund dieses Soll-Zustandes,

laufender Vergleich des Soll-Zustandes mit dem tatsächlich eingenommenen Ist-Zustand,

Feststellungen von Abweichungen, die eine vorgegebene Bandbreite der Soll-Zustände zu Ist-Zuständen überschreiten,

Korrigieren der die Bandbreite überschreitenden Abweichungen,

Erfassung, Meldung und Darstellung der Zustände und deren Abweichungen,

Tests durchführen zu den einzelnen Funktionen.

**Patentansprüche**

1. Anordnung zur Steuerung eines Tropfenverteilers einer IS- oder RIS-Maschine zur Herstellung von Hohlglasartikeln, welcher mit einem hydraulischen Antrieb zur Ausführung periodischer Schwenkbewegungen gekoppelt ist, welcher hydraulische Antrieb mittels eines Umschaltventils beaufschlagbar ist, welches von einem elektronischen Rechner gesteuert ist, dadurch gekennzeichnet, daß der hydraulische Antrieb zur Verschiebung einer Zahnstange (2) von einem innerhalb eines Zylinders (4) bewegbaren Kolben (3) ausgebildet ist, wobei die Zahnstange in Wirkverbindung mit dem Tropfenverteiler steht, und daß das Umschaltventil (6) über einen Digital-Analog-Wandler (8) mit einem Adapter (10) verbunden ist, an den über einen Analog-Digital-Wandler (11) ein mit der Zahnstange (2) des Tropfenverteilers in Wirkverbindung stehender Winkelcodierer (9) od.dgl. angeschlossen ist und der über ein parallel arbeitendes Interface (14) mit einer Recheneinheit (12) sowie einem Speicherwerk (13) in Verbindung steht und mit einer Synchronisation (15) gekoppelt ist.

2. Anordnung nach Anspruch 1, dadurch gekennzeichnet, daß als Umschaltventil (6) ein proportional arbeitendes Umsteuerventil Verwendung findet.

3. Anordnung nach Anspruch 1 oder 2, dadurch gekennzeichnet, daß zwischen Umschaltventil (6) und Wandler (8) ein Servoverstärker (7) zwischengeschaltet ist.

4. Anordnung nach Anspruch 1, 2 oder 3, dadurch gekennzeichnet, daß auf den Adapter (10) eine Soll-Wert-Eingabe (16) und/oder eine Ist-Wert-Darstellung (16) und/oder ein Warngerät (17) und/oder ein Not-Stopp (18) geschaltet ist bzw. sind.

**Claims**

1. System for controlling a gob distributor of an IS or RIS machine for the production of hollow glass articles, which is coupled with a hydraulic drive for the execution of periodic rotary movements, which hydraulic drive is pressurizable by a change-over valve, which is controlled by an electronic computer, characterised in that the hydraulic drive is designed for displacing a rack (2) by a piston (3) movably-mounted inside a cylinder (4), wherein the rack is in operative connection with the gob distributor, and that the change-over valve (6) is connected via a digital/analogue converter (8) to an adaptor (10), to which is connected via an analogue/digital converter (11) an angle encoder (9) or similar being in operative connection with the rack (2) of the gob distributor and which is in connection via a parallel-operating interface (14) with a computing unit (12) as well as a storage unit (13) and is coupled with a synchroniser (15).

2. System according to claim 1, further characterised in that as change-over valve (6) is used a proportionally operating shuttle valve.

3. System according to claim 1 or 2, further characterised in that between change-over valve (6) and converter (8) is interconnected a servo amplifier (7).

4. System according to claim 1, 2 or 3, further characterised in that onto the adaptor (10) is or are connected a sept-point input (16) and/or an actual value display (16) and/or a warning device (17) and/or an emergency stop (18).

**Revendications**

1. Dispositif pour la commande d'un distributeur de paraisons appartenant à une machine «IS» ou «RIS» de fabrication d'objets en verre creux, qui est couplé à un actionneur hydraulique servant à l'exécution de basculements périodiques, où l'actionneur hydraulique peut être commandé à l'aide d'une valve d'inversion qui est elle-même commandée par un calculateur électronique, caractérisé en ce que l'actionneur hydraulique servant à la translation d'une crémaillère (2) est constitué par un piston (3) qui se déplace à l'intérieur d'un cylindre (4), la crémaillère étant en liaison active avec le distributeur de paraisons et en ce que la valve d'inversion (6) est reliée, par l'intermédiaire d'un convertisseur numérique-analogique (8), à un adaptateur, auquel est connecté, par l'intermédiaire d'un convertisseur analogique-numérique (11), un codeur d'angle (9) ou analogue lié fonctionnellement à la crémaillère (2) du distributeur de paraisons, cet adaptateur étant en liaison, par l'intermédiaire d'une interface (14) fonctionnant en parallèle, avec une unité de calcul (12) ainsi qu'avec une mémoire (13), et qui est accouplé à un synchronisateur (15).

2. Dispositif selon la revendication 1, caractérisé en ce que la valve d'inversion (6) est une valve d'inversion à fonctionnement proportionnel.

3. Dispositif selon la revendication 1 ou 2, caractérisé en ce qu'un servo-amplificateur (7) est intercalé entre la valve d'inversion (6) et le convertisseur (8).

4. Dispositif selon la revendication 1, 2 ou 3, caractérisé en ce que, sur l'adaptateur (10) est ou sont connecté(s) une entrée de valeurs de consigne (16) et/ou un dispositif de représentation des valeurs réelles (16) et/ou un appareil avertisseur (17) et/ou un dispositif d'arrêt d'urgence (18).